# FASCICULE DE BREVET EUROPEEN

(11) **EP 1 398 869 B1**
(45) Date de publication et mention de la délivrance du brevet: **16.05.2018**
(21) Numéro de dépôt: 03300098.5
(22) Date de dépôt: 28.08.2003
(51) Int. Cl.: H02P 6/185, H02P 6/24, H02P 6/21

(54) **Procédé et calculateur de détermination de la position angulaire à l'arrêt d'un rotor, unité de commande et système incorporant ce calculateur.**
Prozess und Rechner zur Bestimmung des Drehwinkels eines Rotors in Ruhelage, Steuereinheit und System unter Verwendung des Rechners
Process and calculator for the angular position determination of a rotor at standstill, controller and system incorporating the calculator

(30) Priorité: 05.09.2002 FR 0211002
(43) Date de publication de la demande: 17.03.2004
(73) Titulaire: ALSTOM Transport Technologies, 93400 Saint-Ouen (FR)
(72) Inventeur: Benchaib, Abdelkrim, F-78180 Montigny Le Bretonneux (FR); Alacoque, Jean-Claude, F-69360 Communzy (FR); Poullain, Serge, F-91290 Arpajon (FR); Thomas, Jean-Luc, F-77300 Fontainebleau (FR)
(74) Mandataire: Lavoix

(56) Documents cités:
- EP-A- 0 827 267
- WO-A-90/12278
- US-A- 5 001 405
- US-A- 5 796 235
- US-B1- 6 172 498

## Description

L'invention concerne un procédé et un système de détermination de la position angulaire à l'arrêt d'un rotor dans un stator d'une machine électrique tournante synchrone, le stator étant équipé de plusieurs bobinages destinés à créer un champ magnétique d'entraînement en rotation du rotor, chaque bobinage étant muni d'au moins une borne d'application d'une tension d'alimentation.

Il est particulièrement important de mesurer la position à l'arrêt d'un rotor, notamment pour pouvoir appliquer dès le démarrage de la machine électrique tournante synchrone, les commandes les mieux adaptées.

Dans la plupart des systèmes connus, la machine électrique tournante synchrone est équipée à cet effet de capteurs de la position angulaire du rotor. De récents travaux ont divulgué des procédés pour mesurer la position angulaire à l'arrêt d'un rotor sans capteur de position, tel que les documents US US6172498 ou EP 1 160 966.

La demande de brevet européen EP 1 160 966 divulgue un procédé de ce type appliqué à une machine électrique tournante comportant un rotor à aimant et un stator équipé d'un bobinage d'excitation par phase. Les bobinages de cette machine électrique tournante sont montés en étoile.

Le procédé de EP 1 160 966 comporte les étapes suivantes :
- appliquer, respectivement aux bornes d'un premier puis d'un deuxième bobinage une paire d'impulsions de tension successives de polarité inverse, les impulsions de tension ayant une valeur prédéfinie,
- mesurer, pour chaque impulsion, une tension aux bornes d'une résistance de mesure raccordée entre le neutre du montage en étoile et la terre, après un intervalle de temps prédéfini,
- pour chaque paire d'impulsions, relever la différence entre les deux tensions mesurées aux bornes de la résistance, respectivement pour le premier puis pour le deuxième bobinage,
- établir les positions angulaires possibles du rotor à partir d'un abaque préenregistré représentant la corrélation entre les différences relevées et des positions angulaires,
- sélectionner, parmi les positions angulaires possibles précédemment établies, celle qui est la plus probable.

Ce procédé bien que satisfaisant présente plusieurs inconvénients. En particulier, l'architecture de la machine électrique tournante et son unité de commande doivent être modifiées. En effet, en plus d'un onduleur propre à appliquer des tensions triphasées aux bornes des bobinages de la machine électrique tournante, l'unité de commande doit être équipée d'un générateur indépendant de paires d'impulsions à appliquer aux bornes de ces mêmes bobinages. L'agencement du moteur, quant à lui, doit être modifié pour raccorder entre le point neutre de l'étoile et la masse un capteur de tension.

L'invention vise à remédier à ces inconvénients en proposant un procédé de détermination de la position angulaire à l'arrêt d'un rotor plus simple à mettre en oeuvre.

L'invention a donc pour objets un procédé, un calculateur pour exécuter ce procédé, une unité de commande intégrant un tel calculateur et un système comportant une telle unité de commande tels que définis par les revendications.

Le procédé ci-dessus applique aux bornes des bobinages du stator des vecteurs de tension similaires à ceux appliqués par l'onduleur pour démarrer et commander la machine électrique tournante dans le cadre d'un procédé de commande vectorielle de la machine. Ainsi, l'application d'un tel vecteur de tension ne nécessite aucune adaptation de son unité de commande. En particulier, et contrairement au procédé de EP 1 160 966, aucun générateur d'impulsions supplémentaire n'est requis. De plus, puisqu'il est nécessaire de relever le signal de réponse de l'ensemble des bobinages du stator et non pas la réponse de chaque bobinage individuellement, il n'est pas nécessaire d'accéder au point neutre pour faire ce relevé.

L'invention sera mieux comprise à la lecture de la description qui va suivre, donnée uniquement à titre d'exemple et faite en se référant aux dessins sur lesquels :
- la figure 1 est une illustration schématique de l'architecture d'un système conforme à l'invention,
- la figure 2 est un graphique représentant un vecteur de tension dans un repère diphasé fixe au stator,
- la figure 3 est un organigramme d'un premier procédé conforme à l'invention,
- la figure 4 est une illustration de deux séquences de vecteurs de tension dans un repère diphasé fixe au stator,
- la figure 5 est une illustration de l'évolution au cours du temps de la tension et du courant lors de l'application d'une séquence de vecteurs de tension,
- la figure 6 est un organigramme d'un second procédé conforme à l'invention,
- la figure 7 est une illustration de l'évolution au cours du temps de la tension et du courant lors de l'application d'une séquence de vecteurs de tension dans le cas du procédé de la figure 6.

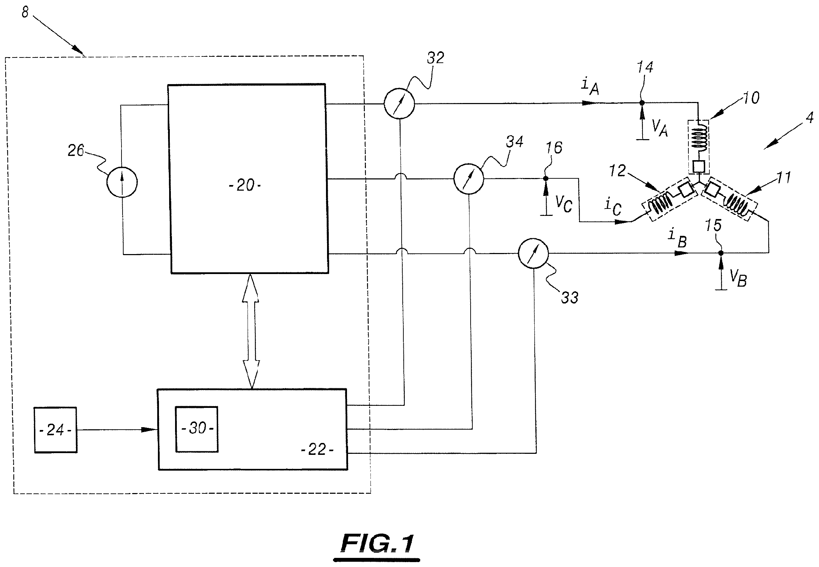

La figure 1 représente une machine électrique tournante synchrone 4 raccordée à une unité 8 de commande de cette machine 4. La machine 4 est par exemple un moteur électrique tournant triphasé synchrone comportant un rotor logé dans un stator. Le rotor est par exemple à aimants permanents ou bobinés présentant au moins deux pôles magnétiques opposés. Ici, le rotor est un rotor lisse c'est-à-dire dépourvu de pôles saillants.

Le stator comporte trois phases raccordées en étoile et une armature en matériau magnétique doux. Chaque phase du stator comporte un bobinage d'excitation respectif 10, 11, 12 propre à attirer et/ou à repousser les pôles du rotor lorsqu'il est excité. Le bobinage 10 est raccordé entre le point neutre du montage en étoile et une seule borne 14 d'application de tension. De façon similaire, les bobinages 11 et 12 sont raccordés entre le point neutre et respectivement des bornes 15 et 16 d'application de tension.

Les tensions appliquées aux bornes 14 à 16 sont respectivement notées V_{A}, V_{B} et V_{C}. Les courants circulant respectivement dans les bobinages 10 à 12 sont respectivement notés I_{A}, I_{B} et I_{C}. Par construction et de façon connue l'intensité du courant dans chacun des bobinages ne doit pas dépasser une intensité maximale au-delà de laquelle la machine 4 est endommagée. Ces intensités maximales pour les bobinages 10 à 12 sont respectivement notées I_{A} max, I_{B} max et I_{C} max.

L'application d'une tension triphasée aux bornes 14 à 16 provoque la création par les bobinages d'un champ magnétique tournant. Ce champ magnétique présente une direction de magnétisation.

Chaque direction de magnétisation correspond à un jeu de tensions V_{A}, V_{B} et V_{C} dont les valeurs sont connues. Ce jeu de tensions à appliquer simultanément aux trois bornes 14 à 16 des bobinages 10 à 12 est appelé vecteur de tension. Les coordonnées de ce vecteur de tension dans un espace à trois dimensions sont représentées par les valeurs simultanées des tensions V_{A}, V_{B} et V_{C}.

Classiquement et de manière à faciliter la détermination de ces vecteurs de tension, on ramène cet espace à trois dimensions à un espace à deux dimensions appelé repère diphasé fixe au stator. Ce repère diphasé fixe au stator est également connu sous les termes "repère *α*, *β*" dans certains pays comme la France ou sous les termes "repère D, Q" dans d'autres pays comme les Etats-Unis. Le passage de l'espace à trois dimensions dans l'espace à deux dimensions s'effectue à l'aide d'une transformation connue dite transformation de Concordia. Pour plus d'informations sur cette transformation, on pourra se référer à l'ouvrage suivant : "Synchronous Machines: Theory and Performance", John Wiley (General Electric series), New York, 1951.

Dans le repère *α*, *β*, le vecteur de tension est défini par deux coordonnées polaires Vcos*θ*, Vsin *θ* reliées de façon bi-univoque ou bijective aux coordonnées V_{A}, V_{B} et V_{C} par la transformation de Concordia.

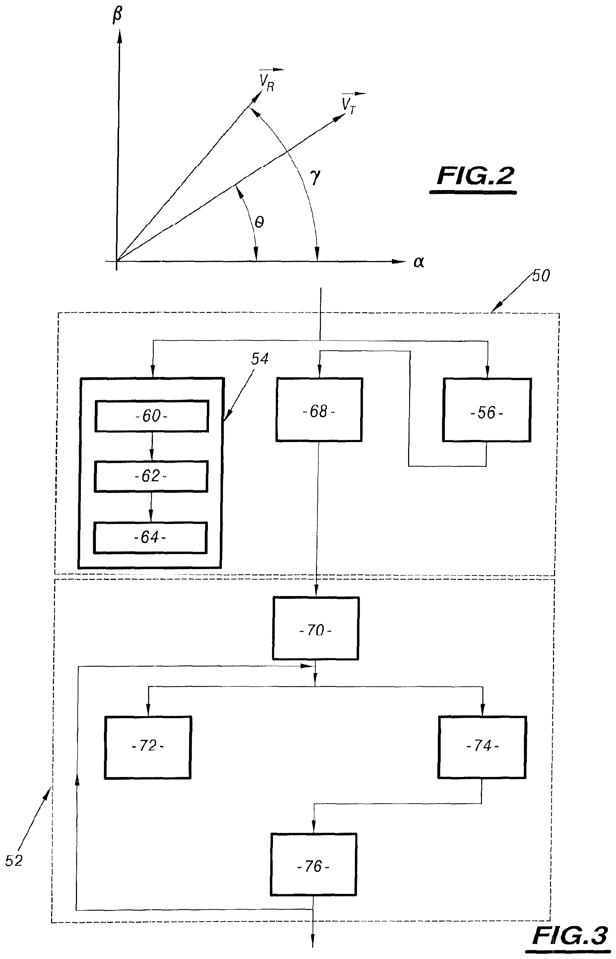

La figure 2 représente un exemple de repère *α*, *β*, dans lequel le vecteur V_{T} représente le vecteur de tension tandis que le vecteur V_{R} représente la direction de magnétisation du rotor. Ici, ce vecteur V_{R} fait un angle *γ* avec la direction a tandis que le vecteur V_{T} fait un angle *θ* avec cette même direction. Dans le repère α, β, le vecteur V_{T} est aligné sur la direction de magnétisation du champ magnétique créé par les bobinages.

Cette représentation dans un repère des vecteurs de tension est utilisée de façon classique pour commander les machines électriques tournantes et, en particulier, pour commander la puissance ou le couple de ces machines. De telles commandes mettant en oeuvre des vecteurs de tension sont connues sous le terme de commandes vectorielles.

Les intensités instantanées et simultanées des courants I_{A}, I_{B} et I_{C} définissent également un jeu de valeurs formant les coordonnées d'un vecteur de courant V_{I}. De façon similaire à ce qui a été décrit pour les tensions, ce vecteur de courant est défini par deux coordonnées polaires Icos *ω*, Icos *ω* dans le repère *α*, *β*. Ces coordonnées polaires sont reliées de façon bi-univoque ou bijective aux coordonnées I_{A}, I_{B} et I_{C} par la même transformation de Concordia.

Dans la suite de la description, l'amplitude du vecteur de tension V_{T} est notée V, l'amplitude du vecteur de courant V_{I} est notée I et l'amplitude du vecteur de courant correspondant aux intensités maximales à ne pas dépasser dans les bobinages 10 à 12 est notée Iₘₐₓ.

L'unité de commande 8 est propre à mettre en oeuvre un procédé de commande vectorielle de la machine 4 de manière à commander la puissance développée par cette machine.

A cet effet, l'unité de commande 8 comporte un onduleur triphasé 20, un calculateur programmable 22 destiné à commander l'onduleur 20, et une unité de pilotage 24 propre à transmettre des instructions de pilotage au calculateur 22.

L'onduleur triphasé 20 ou convertisseur de tension est propre à alimenter en tension chacune des phases de la machine 4. A cet effet, il est raccordé d'un côté à une source 26 de tension continue et de l'autre côté à chacune des bornes 14 à 16. L'onduleur 20 est classique et réalisé, par exemple, à partir de six transistors IGBT (Insulated Gate Bipolar Transistor). Sa structure ne sera pas décrite ici.

Le calculateur 22 est propre à commander l'ouverture et la fermeture de chacun des transistors IGBT de l'onduleur 20 pour que cet onduleur applique aux bornes 14 à 16 de la machine 4 des tensions correspondant à un vecteur de tension prédéfini. En particulier, le calculateur 22 est propre à commander la mise en rotation du rotor de la machine 4 ainsi que les différents paramètres de fonctionnement de cette machine 4 tels que la vitesse de rotation du rotor, le couple ou la puissance développés par la machine 4.

A cet effet, le calculateur 22 est apte à exécuter un algorithme de commande vectorielle classique de la machine 4. Cet algorithme est destiné à transformer des instructions de pilotage transmises par l'unité 24 en des séquences de vecteurs de tension à appliquer aux bornes 14 à 16.

L'unité de pilotage 24 est destinée à envoyer au calculateur 22 des instructions de démarrage, d'accélération ou de décélération de la machine 4. Cette unité de pilotage est soit automatisée, soit, au contraire, actionnée manuellement par un opérateur.

Dans le mode de réalisation décrit ici, le calculateur programmable 22 est adapté pour exécuter le procédé de détermination de la position angulaire à l'arrêt du rotor qui est décrit en regard de la figure 3. En particulier, le calculateur programmable 22 implémente un compteur de temps 30.

Finalement, le calculateur 22 est raccordé à trois capteurs 32 à 34 de courant. Ces capteurs 32 à 34 sont raccordés aux bobinages 10 à 12 de manière à mesurer simultanément les intensités des courants I_{A}, I_{B} et I_{C}.

Dans de telles machines, le champ magnétique créé par le stator interfère avec celui créé par le rotor. Si la direction de magnétisation du stator est proche de celle du rotor alors les champs magnétiques s'additionnent et le champ magnétique créé dans le matériau magnétique du stator est élevé. Au contraire, si la direction de magnétisation créée par le stator est opposée à celle du rotor, alors les champs magnétiques se soustraient et le champ magnétique créé dans le matériau magnétique du stator est faible.

Dans ces conditions, pour un choix adéquat de l'intensité du champ magnétique créé par le stator, lorsque le champ magnétique du stator et du rotor s'additionnent, le matériau magnétique est amené à saturation tandis que lorsqu'ils se soustraient, le matériau magnétique du stator reste insaturé. Lorsque le matériau magnétique est saturé, l'inductance des bobinages 10 à 12 décroît et l'intensité du courant dans les bobinages s'accroît plus vite en réponse à l'application d'une tension. Ainsi, l'évolution des caractéristiques du courant dans les bobinages est donc corrélée ou reliée à la position du rotor. Autrement dit, les variations d'intensité sont d'autant plus rapides que la différence angulaire entre les vecteurs V_{T} et V_{R}, dans le repère *α*, *β*, est faible. Au contraire, si la direction du vecteur V_{T} est éloignée de celle du vecteur V_{R} alors le matériau magnétique n'est pas saturé et les variations d'intensité sont lentes.

Le procédé de la figure 3 exploite ce principe pour déterminer la position angulaire à l'arrêt du rotor.

Le procédé de la figure 3 est décrit dans le cas simplifié où le rotor de la machine 4 ne comporte qu'une seule paire de pôles.

Il comporte une première phase 50 de détermination de la position angulaire à l'arrêt du rotor à plus ou moins 90° près, suivie d'une seconde phase 52 d'affinement de la plage d'incertitude.

Lors de la phase 50 le calculateur 22 exécute simultanément une étape 54 d'application d'une séquence de vecteurs de tension et une étape 56 de relevé de signaux corrélés à la position angulaire du rotor.

Lors de l'étape 54 le calculateur commande l'application d'une séquence de vecteurs de tension formée par exemple uniquement de trois vecteurs de tension successifs V₁, V₂ et V'₁. Dans le mode de réalisation décrit ici, ces vecteurs de tension sont égaux en amplitude (V₀). Cette amplitude V₀ est choisie suffisamment grande pour provoquer l'apparition d'un vecteur de courant dont l'amplitude obtenue est égale à Iₘₐₓ, et suffisamment petite pour que l'intervalle de temps mis pour atteindre Iₘₐₓ soit mesurable avec une bonne précision.

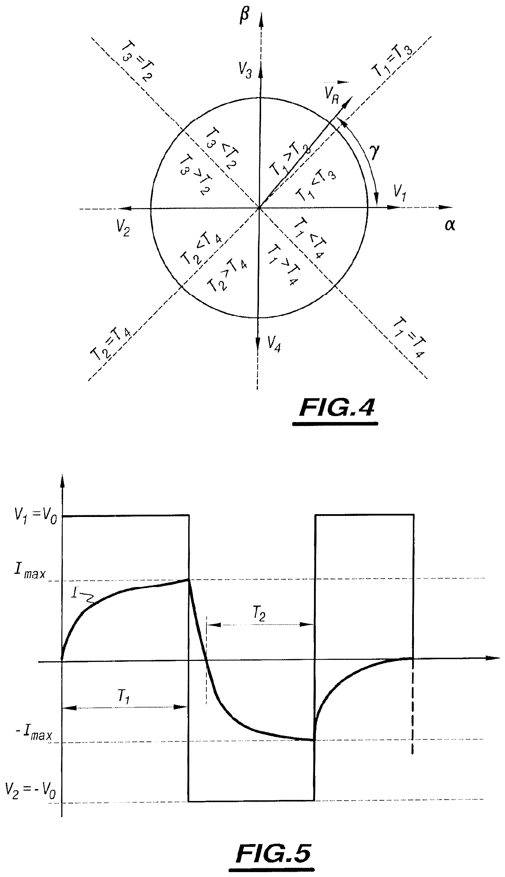

V₁ et V₂ sont de directions opposées tandis que V'₁ présente la même direction que V₁ et se superpose à ce dernier. Les vecteurs V₁, V₂ sont représentés dans le repère α, β de la figure 4 ainsi que la direction de magnétisation V_{R} du rotor. L'angle initial entre le vecteur V₁ et l'axe *α* du repère *α*, *β* est choisi quelconque. A titre d'illustration, cet angle initial est choisi ici égal à 0°.

Ici, par exemple, les vecteurs de tension sont des vecteurs de tension triphasée. Ainsi, les valeurs des tensions V_{A}, V_{B} et V_{C} formant les coordonnées de chaque vecteur de tension sont déphasées les unes par rapport aux autres d'un angle de 2π/N où N est le nombre de phases du stator et est égal à 3 dans cet exemple.

Les opérations réalisées lors de cette étape 54 sont décrites en regard de la figure 5. La figure 5 représente l'évolution au cours du temps de l'amplitude du vecteur de tension V_{T} appliqué aux bornes 14 à 16 et l'évolution au cours du temps de l'amplitude du vecteur de courant V_{I} correspondant.

L'étape 54 débute par une première opération 60 d'application du vecteur de tension V₁. Ce vecteur de tension est appliqué aux bornes 14 à 16 tant que l'amplitude du vecteur de courant n'atteint pas l'intensité maximale Iₘₐₓ. L'amplitude I du vecteur de courant est initialement nulle. En réponse à l'application du vecteur de tension V₁, l'amplitude I du vecteur de courant s'accroît progressivement jusqu'à atteindre l'intensité Iₘₐₓ en une durée T₁.

A cet instant T₁, le calculateur 22 procède à l'opération 62 d'application du vecteur de tension V₂ aux bornes 14 à 16.

L'amplitude I du vecteur de courant décroît alors puis passe par une valeur nulle et enfin continue à décroître pour atteindre la valeur - Iₘₐₓ. L'intervalle de temps ou durée entre l'instant où l'amplitude I du vecteur de courant est nulle et l'instant où elle est égale à - Iₘₐₓ est noté T₂.

Lorsque l'amplitude I du vecteur de courant atteint la valeur - Iₘₐₓ, le calculateur procède immédiatement à l'opération 64 d'application du vecteur de tension V'₁. En réponse à l'application de ce vecteur de tension V'₁, l'amplitude du vecteur de courant décroît. Lorsque cette amplitude I atteint la valeur nulle, le calculateur interrompt l'application du vecteur de tension V'₁.

L'aire en dessous de la courbe I est proportionnelle au couple du moteur. Cette aire créée par l'opération 60 n'est pas strictement égale à l'aire créée par l'opération 62. Ainsi, malgré que les vecteurs de tension V₁ et V₂ soient de direction opposée, il existe un couple résiduel dû à la saturation du matériau magnétique du stator soit lors de l'opération 60 soit lors de l'opération 62. Par conséquent, l'application d'un premier vecteur de tension dans une direction puis d'un deuxième vecteur de tension dans une direction opposée n'est pas suffisante pour garantir que le rotor ne se déplace pas. Ainsi, dans le procédé de la figure 3 pour remédier à ce problème un troisième vecteur de tension V'₁ est appliqué pour annuler ce couple résiduel. Il a été démontré que l'aire en dessous de la courbe I, lors de l'opération 64, annule exactement le couple résiduel.

L'étape 56 est exécutée par le calculateur 22 simultanément à l'étape 54. Cette étape 56 consiste à mesurer ou à relever les intervalles de temps T₁ et T₂.

A l'issue des étapes 54 et 56, le calculateur procède à l'étape 68 d'établissement de la position angulaire du rotor à ± 90° près. Lors de cette étape 68, le calculateur compare la durée T₁ et la durée T₂. Si la durée T₁ est strictement inférieure à la durée T₂, l'angle *γ* du vecteur V_{R} est compris entre - 90° et + 90°. Dans le cas contraire, l'angle *γ* du vecteur V_{R} est compris entre + 90° et - 90°. Si T1 est égal à T2, l'angle γ du vecteur V_{R} est soit égal à + 90°, soit égal à -90°.

Après cette détermination d'une plage initiale de position angulaire possible, le calculateur procède à la phase 52. Lors de cette phase 52, le calculateur commande l'application d'une nouvelle séquence de vecteurs de tension de manière à affiner la plage de positions angulaires précédemment établie. A cet effet, il débute par une opération 70 de choix automatique du décalage angulaire de cette nouvelle séquence par rapport à celle appliquée lors de la phase 50. Lors de la première itération de cette étape 70, le décalage angulaire est choisi systématiquement égal à 90°. Ainsi, la nouvelle séquence est identique à celle de la phase 50 à l'exception du fait qu'elle est décalée angulairement de 90° par rapport à la première séquence. Cette nouvelle séquence se compose ici d'un vecteur V₃ formant un angle de 90° par rapport à l'axe *a* du repère *α*, *β*, d'un vecteur V₄ formant un angle de 270° par rapport à l'axe *a* du repère *α*, *β* et d'un vecteur de tension V'₃ de même direction que le vecteur V₃. Le décalage angulaire de cette nouvelle séquence est choisi de manière à diviser en deux intervalles égaux la plage de positions angulaires possibles du rotor ou l'incertitude sur la position angulaire du rotor précédemment établie.

Les vecteurs V₃ et V₄ sont représentés sur la figure 4.

Ensuite le calculateur réalise simultanément l'étape 72 d'application de cette nouvelle séquence de vecteurs de tension et l'étape 74 de relevé des signaux de réponse corrélés à la position angulaire du rotor.

Les étapes 72 et 74 sont respectivement identiques aux étapes 54 et 56 à l'exception du fait que celles-ci sont réalisées en utilisant la nouvelle séquence établie lors de l'étape 70.

Les durées relevées lors des applications des vecteurs V₃ et V₄ sont respectivement notées T₃ et T₄.

Une fois ces étapes 72, 74 réalisées, le calculateur procède à une étape 76 d'utilisation des nouveaux résultats pour affiner la plage précédemment établie.

Lors de cette étape, le calculateur réalise des opérations de comparaison de chacune des durées T_{I} relevées lors des étapes 56 et 74 pour déterminer quelles sont les deux durées les plus petites. Dans l'exemple décrit ici, puisque l'angle *γ* représentant la position angulaire du rotor est sensiblement égale à 50°, les deux durées les plus petites sont T₁ et T₃.

Comme illustré sur la figure 4, si la durée T₁ est inférieure à la durée T₃ alors le vecteur V_{R} est situé dans la plage angulaire comprise entre 0 et 45°.

Si la durée T₁ est supérieure à la durée T₃, alors l'angle *γ* est compris entre 45° et 90° et si la durée T₁ est égale à la durée T₃, alors l'angle *γ* est égal à 45°. Ainsi, à l'issue de cette étape 76, la position angulaire du rotor est connue à plus ou moins 22,5 ° près.

Tant que l'incertitude sur la position angulaire du rotor est jugée trop importante, les étapes 70 à 76 sont réitérées.

Lors de l'itération suivante de l'étape 70, le décalage angulaire de la nouvelle séquence est choisi égal à 45° de manière à diviser la plage comprise entre 45° et 90° en deux intervalles égaux.

Ainsi, à l'issue de cette deuxième exécution des étapes 70 à 76, la position angulaire du rotor sera connue à plus ou moins 11,25° près.

Le choix d'un décalage angulaire permettant de diviser par deux l'incertitude selon le principe de la dichotomie permet d'assurer une diminution rapide de l'incertitude sur la position angulaire du rotor.

Dans l'exemple décrit ici, les étapes 70 à 76 sont réitérées jusqu'à ce que l'incertitude sur la position angulaire du rotor soit inférieure à plus ou moins un degré.

Dans le cas particulier où l'incertitude sur la position angulaire est divisée par deux à chaque itération et où l'incertitude finale doit être inférieure à plus ou moins 22,5° près, l'étape 68 et la première itération de l'étape 70 ne sont pas réalisées. En effet, dans ce cas particulier, le choix du décalage angulaire lors de la première itération de l'étape 70 est le même quel que soit le résultat établi lors de l'étape 68. Par conséquent, il est possible de procéder à l'issue des étapes 54 et 56 directement aux étapes 72 et 74 en réalisant la première itération de ces étapes 72 et 74 à l'aide d'une séquence de vecteurs de tension décalés angulairement de 90° par rapport à ceux utilisés lors des étapes 54 et 56.

Le procédé de la figure 3 est facilement adaptable au cas où le rotor comporte plusieurs paires de pôles. En effet, la position d'un rotor équipé de plusieurs paire de pôles est toujours représentée par un seul vecteur de tension V_{R} dans le repère α, β. Par conséquent, le procédé de la figure 3 est applicable à l'identique. A l'issue du procédé de la figure 3, la position d'une seule des paires de pôles du rotor est connue, ce qui est suffisant pour les procédés de commande du moteur électrique.

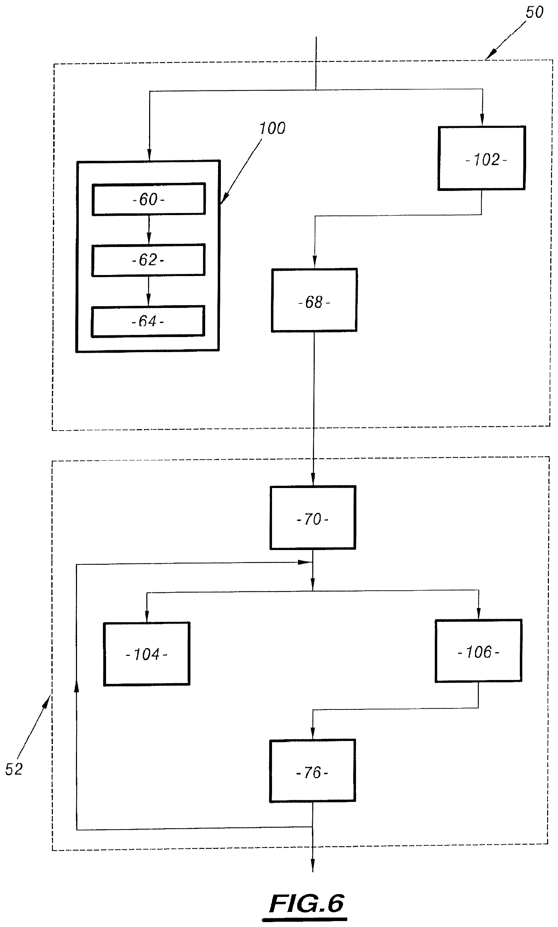

La figure 6 représente un second mode de réalisation d'un procédé de détermination de la position angulaire à l'arrêt d'un rotor. Ce procédé est identique à celui de la figure 3, à l'exception des étapes 54, 56, 72 et 74 qui sont remplacées respectivement par des étapes 100, 102, 104 et 106.

Dans ce procédé, ce n'est plus la durée Tᵢ mise pour atteindre un seuil d'intensité qui est mesurée lors de chaque application d'un vecteur de tension mais l'intensité atteinte lors de chaque application d'un vecteur de tension pendant une durée D₁ prédéfinie.

A cet effet, l'étape 100 consiste à appliquer une première séquence de vecteurs de tension formée de trois vecteurs Vᵢ₁, Vᵢ₂ et Vᵢ₃. L'orientation et l'amplitude de ces vecteurs Vᵢ₁, Vᵢ₂ et Vᵢ₃ sont identiques à celles respectivement des vecteurs V₁, V₂ et V₃ décrits en regard de la figure 5.

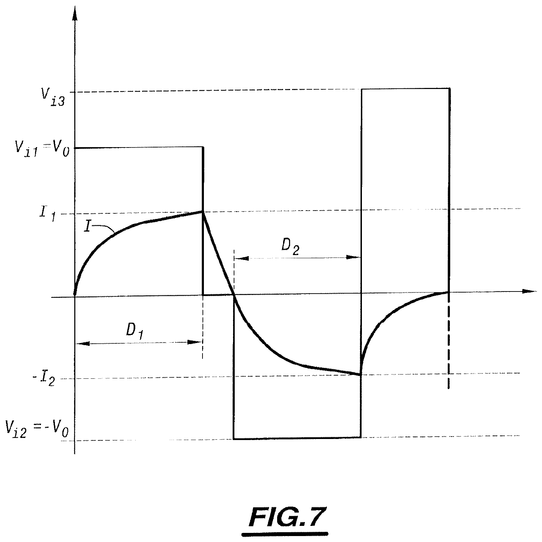

Les opérations réalisées lors de cette étape 100 sont décrites en regard de la figure 7. La figure 5 représente l'évolution au cours du temps simultanément de l'amplitude du vecteur de tension appliqué aux bornes 14 à 16 et de l'amplitude du vecteur de courant Vᵢ obtenu en réponse.

Lors de l'étape 100, le calculateur commande d'abord l'application du vecteur Vᵢ₁ uniquement pendant une durée prédéterminée et constante D₁.

Ensuite, le calculateur attend que l'amplitude I du vecteur de courant s'annule. Lorsque l'amplitude I s'annule pour la première fois, le calculateur commande alors l'application du vecteur Vᵢ₂ pendant une durée D₂ égale à la durée D₁. Ensuite, immédiatement après avoir cessé d'appliquer le vecteur de tension Vᵢ₂, le calculateur applique un vecteur de tension Vᵢ₃ dont l'amplitude est calculée pour annuler le couple résiduel du rotor créé par l'application des vecteurs de tension Vᵢ₁ et Vᵢ₂, et de manière à ramener l'amplitude I du vecteur de courant à zéro.

La valeur de l'amplitude I à la fin de l'application du vecteur Vᵢ₁ et à la fin de l'application du vecteur Vᵢ₂ sont respectivement notées I₁ et I₂.

L'étape 102 consiste à relever les valeurs I₁ et I₂. Ainsi, dans ce mode de réalisation, ce sont les valeurs I₁ et I₂ qui remplacent les valeurs T₁ et T₂ utilisées dans le procédé de la figure 3.

Les étapes 104 et 106 sont respectivement identiques aux étapes 100 et 102 à l'exception du fait qu'elles sont appliquées à la nouvelle séquence de vecteur de tension choisie lors de l'étape 70.

Dans le procédé de la figure 6, la durée D₁ est choisie de manière à ce que, même lorsque les champs magnétiques du rotor et du stator s'additionnent et que le matériau doux est saturé, la valeur I₁ ou I₂ ne dépasse pas l'intensité maximale Iₘₐₓ.

Le procédé des figures 3 et 6 a été décrit dans le cas particulier d'une machine électrique tournante synchrone triphasée. Toutefois, en variante, les procédés décrits sont adaptés à des machines électriques tournantes synchrones polyphasées. Cette variante est identique aux procédés des figures 3 et 6, à l'exception du fait que les vecteurs de tension appliqués ont autant de coordonnées que de phases au stator de la machine.

Finalement, il est intéressant de noter que contrairement au procédé connu tel que celui divulgué dans la demande de brevet EP 1 160 966, les procédés des figures 3 et 6 ne nécessitent pas l'enregistrement dans une mémoire de l'unité de commande d'un abaque établissant la relation entre le signal relevé et la ou chaque position angulaire possible du rotor. Ainsi, l'unité de commande 8 décrite ici est propre à être raccordée à n'importe quel type de moteur électrique sans qu'il soit nécessaire d'établir au préalable, pour chaque type de moteur, cet abaque.

En variante, le capteur de courant 34 est supprimé. En effet, lorsque le moteur triphasé est équilibré, la somme des courants I_{A}, I_{B} et I_{C} est nulle et la valeur du courant I_{C} est facilement calculée à partir des valeurs des courants I_{A} et I_{B} mesurées à l'aide des capteurs de courant 32 et 33.

## Revendications

1. Procédé de détermination de la position angulaire à l'arrêt d'un rotor dans un stator d'une machine électrique tournante synchrone polyphasée (4), le stator étant équipé de plusieurs bobinages (10 à 12) destinés à créer un champ magnétique d'entraînement en rotation du rotor, chaque bobinage (10 à 12) étant muni d'au moins une borne (14 à 16) d'application d'une tension d'alimentation,
le procédé comportant les étapes (54, 56, 58 ; 100, 102, 68, 70, 72, 74, 76 ; 70, 104, 106, 76) suivantes :
a) appliquer une première séquence de vecteurs de tension successifs aux bornes des bobinages (10 à 12), chaque vecteur de tension définissant la valeur de la tension non nulle à appliquer simultanément aux bornes d'alimentation de chaque bobinage, cette première séquence comportant au moins un premier et un second vecteurs de tension propres à modifier les caractéristiques électriques des bobinages (10 à 12) lorsque le champ magnétique d'entraînement créé par ces bobinages (10 à 12) s'additionne au champ magnétique du rotor, et au moins un troisième vecteur de tension propre à annuler le couple créé par l'application des premier et second vecteurs de tension,
b) relever, au moins un signal de réponse de l'ensemble des bobinages (10 à 12) à l'application du premier vecteur de tension puis un signal de réponse à l'application du deuxième vecteur de tension, ces signaux de réponse étant corrélés à la position angulaire du rotor,
c) établir la position angulaire du rotor avec une incertitude de ± 90° à partir des signaux relevés lors de l'étape b),
d) réitérer n fois l'étape a) avec, à chaque itération, une nouvelle séquence de vecteurs de tension comportant au moins un vecteur de tension décalé angulairement par rapport aux vecteurs de tension des séquences précédentes,
e) à chaque itération de l'étape d), relever, au moins pour le vecteur décalé angulairement, un signal de réponse de chaque bobinage à l'application de ce vecteur de tension, ce signal de réponse étant corrélé à la position angulaire du rotor, et
f) utiliser les résultats de l'étape e) pour réduire l'incertitude sur la position établie lors de l'étape c),
**caractérisé en ce qu'**il comporte une étape (70) de choix automatique du décalage angulaire dudit au moins un vecteur de tension décalé de chaque nouvelle séquence, ce décalage pouvant être quelconque.

2. Procédé selon la revendication 1, **caractérisé en ce que** chaque nouvelle séquence de vecteurs de tension appliquée comporte également au moins un premier et un deuxième vecteurs de tension propres à modifier les caractéristiques électriques des bobinages (10 à 12) lorsque le champ magnétique d'entraînement créé par ces bobinages (10 à 12) s'additionne au champ magnétique du rotor, et au moins un troisième vecteur de tension propre à annuler le couple créé par l'application des premier et deuxième vecteurs de tension.

3. Procédé selon la revendication 1, **caractérisé en ce que** le choix du décalage angulaire est réalisé automatiquement de manière à diviser par deux l'incertitude sur la position angulaire.

4. Procédé selon l'une quelconque des revendications précédentes, **caractérisé en ce que** les premier et deuxième vecteurs de tension sont de direction opposée.

5. Procédé selon l'une quelconque des revendications précédentes, **caractérisé en ce que** le troisième vecteur de tension est colinéaire et de même direction que le premier vecteur de tension.

6. Procédé selon l'une quelconque des revendications précédentes **caractérisé en ce que** les premier et deuxième vecteurs de tension de chacune des séquences sont égaux en amplitude.

7. Procédé selon l'une quelconque des revendications précédentes, **caractérisé en ce que** tous les vecteurs de tension de chacune desdites séquences sont égaux en amplitude.

8. Procédé selon l'une quelconque des revendications précédentes, **caractérisé en ce que** chaque vecteur de tension est obtenu par une transformation de Concordia.

9. Procédé selon l'une quelconque des revendications précédentes, **caractérisé en ce que** l'application de chaque vecteur de tension provoque l'apparition d'un vecteur de courant, le vecteur de courant étant défini à partir de l'intensité de tous les courants circulant simultanément dans chacun des bobinages (10 à 12) du stator, et **en ce que** ledit signal fonction de la position angulaire du rotor est le temps écoulé entre l'instant où l'amplitude du vecteur de courant est nulle et l'instant où l'amplitude du vecteur de courant franchit un seuil prédéterminé.

10. Procédé selon la revendication 9, **caractérisé en ce que** le seuil prédéterminé correspond à l'intensité maximale du courant susceptible de circuler dans les bobinages (10 à 12) sans risquer de les endommager.

11. Procédé selon l'une quelconque des revendications 1 à 8, **caractérisé en ce que** l'application de chaque vecteur de tension provoque l'apparition d'un vecteur de courant, le vecteur de courant étant défini à partir de l'intensité de tous les courants circulant simultanément dans chacun des bobinages du stator, et **en ce que** ledit signal fonction de la position angulaire du rotor est la valeur de l'amplitude du vecteur de courant après qu'un intervalle de temps prédéterminé se soit écoulé, cet intervalle de temps prédéterminé étant compté à partir de l'instant où l'amplitude du vecteur de courant est nulle.

12. Procédé selon l'une quelconque des revendications précédentes, **caractérisé en ce que** chaque vecteur de tension définit la tension appliquée à une seule borne (14 à 16) d'alimentation en tension de chaque bobinage.

13. Procédé selon la revendication 12, **caractérisé en ce que** le signal de réponse est relevé aux mêmes bornes (14 à 16) que celles où sont appliqués les vecteurs de tension.

14. Calculateur (22) propre à déterminer la position angulaire à l'arrêt d'un rotor dans un stator d'une machine électrique tournante synchrone polyphasée (4), le stator étant équipé de plusieurs bobinages (10 à 12) destinés à créer un champ magnétique d'entraînement en rotation du rotor, chaque bobinage (10 à 12) étant muni d'au moins une borne (14 à 16) d'application d'une tension d'alimentation, le calculateur étant **caractérisé en ce qu'**il est apte à exécuter un procédé de détermination de la position angulaire à l'arrêt d'un rotor conforme à l'une quelconque des revendications 1 à 13.

15. Unité de commande d'une machine électrique tournante synchrone (4) comportant :
- un circuit (20) d'alimentation en tension de la machine électrique tournante synchrone, et
- un calculateur (22) propre à commander le circuit d'alimentation,
**caractérisée en ce que** le calculateur (22) est conforme à la revendication 14.

16. Système d'entraînement en rotation d'un rotor, comportant :
- une machine électrique tournante synchrone (4) propre à entraîner en rotation le rotor, et
- une unité (8) de commande de la machine électrique tournante synchrone (4),
**caractérisé en ce que** l'unité de commande est conforme à la revendication 15.

## Patentansprüche

1. Verfahren zum Bestimmen der Winkelposition bei Stillstand eines Rotors in einem Stator einer elektrischen mehrphasigen Synchronmaschine (4), wobei der Stator mit mehreren Wicklungen (10 bis 12) ausgerüstet ist, die vorgesehen sind, ein Magnetfeld für den Drehantrieb des Rotors zu erzeugen, wobei jede Wicklung (10 bis 12) mit mindestens einem Spannungsversorgungsanschluss (14 bis 16) versehen ist,
wobei das Verfahren die folgenden Schritte (54, 56, 58; 100, 102, 68, 70, 72, 74, 76; 70, 104, 106, 76) umfasst:
a) Anlegen einer Folge von aufeinanderfolgenden Spannungsvektoren an die Anschlüsse der Wicklungen (10 bis 12), wobei jeder Spannungsvektor den Wert der Spannung ungleich null definiert, der gleichzeitig an die Versorgungsanschlüsse jeder Wicklung anzulegen ist, wobei jede erste Folge mindestens einen ersten und einen zweiten Spannungsvektor, die geeignet sind, die elektrischen Eigenschaften der Wicklungen (10 bis 12) zu modifizieren, wenn das von diesen Wicklungen (10 bis 12) erzeugte Antriebsmagnetfeld sich zu dem Magnetfeld des Rotors addiert und mindestens einen dritten Spannungsvektor aufweist, der geeignet ist, das durch das Aufbringen der ersten und zweiten Spannungsvektoren erzeugte Drehmoment zu annullieren,
b) Erfassen mindestens eines Antwortsignals der Gesamtheit der Spulen (10 bis 12) auf die Anlegung des ersten Spannungsvektors, dann eines Antwortsignals auf die Anlegung des zweiten Spannungsvektors, wobei diese Antwortsignale mit der Winkelposition des Rotors korreliert werden,
c) Festlegen einer Winkelposition des Rotors mit einer Unsicherheit von ±90° aus den Signalen, die bei dem Schritt b) erfasst werden,
d) Wiederholen des Schritts a) n-mal mit einer neuen Folge von Spannungsvektoren bei jeder Wiederholung, die mindestens einen Spannungsvektor umfasst, der winkelmäßig in Bezug auf die Spannungsvektoren der vorhergehenden Folgen versetzt ist,
e) bei jeder Wiederholung des Schritts d) Erfassen zumindest für den winkelmäßig versetzten Vektor eines Antwortsignals jeder Spule bei Anlegen dieses Spannungsvektors, wobei das Antwortsignal mit der Winkelposition des Rotors korreliert wird, und
f) Verwenden der Ergebnisse des Schritts e) zum Verringern der Unsicherheit über die bei dem Schritt c) festgelegte Position,
**dadurch gekennzeichnet, dass** es einen Schritt (70) der automatischen Wahl der winkelmäßigen Versetzung des mindestens einen Spannungsvektors aufweist, der bei jeder neuen Folge versetzt wird, wobei diese Versetzung beliebig sein kann.

2. Verfahren nach Anspruch 1, **dadurch gekennzeichnet, dass** jede neue Folge von angelegten Spannungsvektoren gleichfalls mindestens einen ersten und einen zweiten Spannungsvektor, die geeignet sind, die elektrischen Eigenschaften der Wicklungen (10 bis 12) zu modifizieren, wenn das Antriebsmagnetfeld, das von diesen Wicklungen (10 bis 12) erzeugt wird, sich zu dem Magnetfeld des Rotors addiert und mindestens einen dritten Spannungsvektor aufweist, der geeignet ist, das durch die Anlegung des ersten und zweiten Spannungsvektors erzeugte Drehmoment zu annullieren.

3. Verfahren nach Anspruch 1, **dadurch gekennzeichnet, dass** die Wahl der regelmäßigen Versetzung automatisch derart realisiert wird, dass die Unsicherheit über die Winkelposition durch zwei geteilt wird.

4. Verfahren nach einem beliebigen der vorhergehenden Ansprüche, **dadurch gekennzeichnet, dass** der erste und zweite Spannungsvektor entgegengesetzte Richtungen aufweisen.

5. Verfahren nach einem beliebigen der vorhergehenden Ansprüche, **dadurch gekennzeichnet, dass** der dritte Spannungsvektor kollinear zu und von gleicher Richtung wie der erste Spannungsvektor ist.

6. Verfahren nach einem beliebigen der vorhergehenden Ansprüche, **dadurch gekennzeichnet, dass** der erste und zweite Spannungsvektor jeder Folge hinsichtlich der Amplitude gleich sind.

7. Verfahren nach einem beliebigen der vorhergehenden Ansprüche, **dadurch gekennzeichnet, dass** die Spannungsvektoren jeder der Folgen hinsichtlich der Amplitude gleich sind.

8. Verfahren nach einem beliebigen der vorhergehenden Ansprüche, **dadurch gekennzeichnet, dass** der Spannungsvektor durch eine Concordia-Transformation erhalten wird.

9. Verfahren nach einem beliebigen der vorhergehenden Ansprüche, **dadurch gekennzeichnet, dass** die Anlegung jedes Spannungsvektors die Erscheinung eines Stromvektors hervorruft, wobei der Stromvektor aus der Stromstärke aller Ströme, die gleichzeitig in jeder der Wicklungen (10 bis 12) des Stators strömen, und dass das von der Winkelposition des Rotors abhängige Signal die abgelaufene Zeit zwischen dem Zeitpunkt, in dem die Amplitude des Stromvektors null ist, und dem Zeitpunkt, in dem die Amplitude des Stromvektors eine vorbestimmte Schwelle übersteigt, ist.

10. Verfahren nach Anspruch 9, **dadurch gekennzeichnet, dass** die vorbestimmte Schwelle der maximalen Stromstärke entspricht, die geeignet ist, in den Wicklungen (10 bis 12) zu fließen, ohne Gefahr zu laufen, sie zu schädigen.

11. Verfahren nach einem beliebigen der Ansprüche 1 bis 8, **dadurch gekennzeichnet, dass** das Anlegen jedes Spannungsvektors die Erscheinung eines Stromvektors hervorruft, wobei der Stromvektor aus der Stromstärke aller gleichzeitig in jeder der Wicklungen des Stators flie-βenden Ströme definiert ist, und dass das von der Winkelposition des Rotors abhängige Signal der Wert der Amplitude des Stromvektors bei Ablauf eines vorbestimmten Zeitraums ist, wobei dieser vorbestimmte Zeitraum von dem Zeitpunkt gerechnet wird, bei dem die Amplitude des Stromvektors null ist.

12. Verfahren nach einem beliebigen der vorhergehenden Ansprüche, **dadurch gekennzeichnet, dass** jeder Spannungsvektor die Spannung definiert, die an einen einzigen Spannungsversorgungsanschluss (14 bis 16) jeder Spule angelegt wird.

13. Verfahren nach Anspruch 12, **dadurch gekennzeichnet, dass** das Antwortsignal an denselben Anschlüssen (14 bis 16) erfasst wird, an denen die Spannungsvektoren angelegt werden.

14. Rechner (22), geeignet, die Winkelposition bei Stillstand eines Rotors in einem Stator einer mehrphasigen elektrischen Synchronmaschine (4) zu bestimmen, wobei der Stator mit mehreren Wicklungen (10 bis 12) ausgerüstet ist, die vorgesehen sind, ein Magnetfeld für den Drehantrieb des Rotors zu erzeugen, wobei jede Wicklung (10 bis 12) mit mindestens einem Anschluss (14 bis 16) zum Aufbringen einer Spannungsversorgung versehen ist, wobei der Rechner **dadurch gekennzeichnet ist, dass** er in der Lage ist, ein Verfahren zum Bestimmen der Winkelposition bei Stillstand eines Rotors entsprechend einem beliebigen der Ansprüche 1 bis 13 auszuführen.

15. Steuereinheit für eine elektrische Synchronmaschine (4), umfassend:
- einen Spannungsversorgungskreis (20) der elektrischen Synchronmaschine, und
- einen Rechner (22), der geeignet ist, den Versorgungskreis zu steuern,
**dadurch gekennzeichnet, dass** der Rechner (22) nach Anspruch 14 ausgebildet ist.

16. Drehantriebssystem für einen Rotor, umfassend:
- eine elektrische Synchronmaschine (4), die geeignet ist, den Rotor zur Drehung anzutreiben, und
- eine Steuereinheit (8) der elektrischen Synchronmaschine (4),
**dadurch gekennzeichnet, dass** die Steuereinheit nach Anspruch 15 ausgebildet ist.

## Claims

1. Method of determining the angular position of a stopped rotor in a stator of a polyphase synchronous rotating electric machine (4), the stator being equipped with a plurality of windings (10 to 12) intended to create a magnetic field to drive the rotor in rotation, each winding (10 to 12) being provided with at least one terminal (14 to 16) for application of a supply voltage,
the method comprising the following steps (54, 56, 58; 100, 102, 68, 70, 72, 74, 76; 70, 104, 106, 76):
a) applying a first sequence of successive voltage vectors to the terminals of the windings (10 to 12), each voltage vector defining the value of the non-null voltage to be applied simultaneously to the supply terminals of each winding, said first sequence comprising at least a first and a second voltage vector suitable for modifying the electrical characteristics of the windings (10 to 12) when the magnetic drive field created by said windings (10 to 12) is added to the magnetic field of the rotor, and at least a third voltage vector suitable for nullifying the torque created by the application of the first and second voltage vectors,
b) reading at least one response signal from all of the windings (10 to 12) upon application of the first voltage vector, then a response signal upon application of the second voltage vector, said response signals being correlated to the angular position of the rotor,
c) establishing the angular position of the rotor with an uncertainty of ± 90° from the signals read during step b),
d) reiterating step a) n times with, at each iteration, a new sequence of voltage vectors including at least one voltage vector angularly offset relative to the voltage vectors of the preceding sequences,
e) at each iteration of step d), reading, at least for the angularly offset vector, a response signal from each winding upon application of said voltage vector, said response signal being correlated with the angular position of the rotor, and
f) utilizing the results of step e) to reduce the uncertainty about the position established during step c),
**characterized in that** it comprises a step (70) of automatic choice of the angular offset of said at least one offset voltage vector of each new sequence, and said offset can be any offset.

2. Method according to claim 1, **characterized in that** each new sequence of applied voltage vectors also comprises at least one first and one second voltage vector suitable for modifying the electrical characteristics of the windings (10 to 12) when the magnetic drive field created by said windings (10 to 12) is added to the magnetic field of the rotor, and at least a third voltage vector suitable for nullifying the torque created by the application of the first and second voltage vectors.

3. Method according to claim 1, **characterized in that** the choice of the angular offset is performed automatically in such a way as to divide by two the uncertainty of the angular position.

4. Method according to any one of the preceding claims, **characterized in that** the first and second voltage vectors are of opposite direction.

5. Method according to any one of the preceding claims, **characterized in that** the third voltage vector is co-linear with and of the same direction as the first voltage vector.

6. Method according to any one of the preceding claims, **characterized in that** the first and second voltage vectors of each of the sequences are equal in amplitude.

7. Method according to any one of the preceding claims, **characterized in that** all the voltage vectors of each of said sequences are equal in amplitude.

8. Method according to any one of the preceding claims, **characterized in that** each voltage vector is obtained by a Concordia transformation.

9. Method according to any one of the preceding claims, **characterized in that** the application of each voltage vector causes the appearance of a current vector, the current vector being defined from the intensity of all of the currents circulating simultaneously in each of the windings (10 to 12) of the stator, and **in that** said signal, a function of the angular position of the rotor, is the time elapsed between the moment when the amplitude of the current vector is zero and the moment when the amplitude of the current vector crosses a predetermined threshold.

10. Method according to claim 9, **characterized in that** the predetermined threshold corresponds to the maximum intensity of the current likely to circulate in the windings (10 to 12) without the risk of damaging them.

11. Method according to any one of claims 1 to 8, **characterized in that** the application of each voltage vector causes the appearance of a current vector, the current vector being defined from the intensity of all of the currents circulating simultaneously in each of the windings of the stator, and **in that** said signal, a function of the angular position of the rotor, is the value of the amplitude of the current vector after a predetermined interval of time has elapsed, said predetermined interval of time being counted from the moment when the amplitude of the current vector is zero.

12. Method according to any one of the preceding claims, **characterized in that** each voltage vector defines the voltage applied to a single terminal (14 to 16) supplying voltage to each winding.

13. Method according to claim 12, **characterized in that** the response signal is read at the same terminals (14 to 16) as those where the voltage vectors are applied.

14. Computer (22) suitable for determining the angular position of a stopped rotor in a stator of a polyphase synchronous rotating electric machine (4), the stator being equipped with a plurality of windings (10 to 12) intended to create a magnetic field for driving the rotor in rotation, each winding (10 to 12) being provided with at least one terminal (14 to 16) for application of a supply voltage, the computer being **characterized in that** it is capable of executing a method of determining the angular position of a stopped rotor according to any one of claims 1 to 13.

15. Control unit of a synchronous rotating electric machine (4) comprising:
- a voltage supply circuit (20) of the synchronous rotating electric machine, and
- a computer (22) suitable for controlling the supply circuit,
**characterized in that** the computer (22) is in accordance with claim 14.

16. System for driving a rotor in rotation, comprising:
- a synchronous rotating electric machine (4) suitable for driving the rotor in rotation, and
- a control unit (8) of the synchronous rotating electric machine (4),
**characterized in that** the control unit is in accordance with claim 15.
